# EUROPÄISCHE PATENTSCHRIFT

(11) **EP 4 096 897 B1**
(45) Veröffentlichungstag und Bekanntmachung des Hinweises auf die Patenterteilung: **20.08.2025**
(21) Anmeldenummer: 21702472.8
(22) Anmeldetag: 28.01.2021
(51) Int. Cl.: B29C 64/112, B22F 10/18, B29C 48/21, B29C 48/154, B29C 48/00, B22F 12/00, B22F 10/00, B33Y 70/00, B33Y 30/00, B33Y 10/00, B29C 64/336, B29C 64/209, B29C 64/118, B22F 12/55

(54) **VERFAHREN ZUM HERSTELLEN EINES BAUTEILS MITTELS EINES ADDITIVEN FERTIGUNGSVERFAHRENS**
METHOD FOR MANUFACTURING A COMPONENT BY MEANS OF AN ADDITIVE MANUFACTURING METHOD
PROCÉDÉ DE FABRICATION D'UN COMPOSANT À L'AIDE D'UN PROCÉDÉ DE FABRICATION ADDITIVE

(30) Priorität: 30.01.2020 DE 102020102225
(43) Veröffentlichungstag der Anmeldung: 07.12.2022
(73) Patentinhaber: Technische Hochschule Köln, 50968 Köln (DE)
(72) Erfinder: BÜTER, André, 51103 Köln (DE); GRÜNWALD, Stefan, 51427 Bergisch Gladbach (DE); WIENSTROER, Volker Arne, 51491 Overath (DE); KRONBERGER, Rainer, 50769 Köln (DE)
(74) Vertreter: Michalski Hüttermann & Partner Patentanwälte mbB
(86) Internationale Anmeldenummer: PCT/EP2021/051992
(87) Internationale Veröffentlichungsnummer: WO 2021/152014

(56) Entgegenhaltungen:
- DE-A1- 102016 225 837
- FR-A1- 3 069 800
- US-A1- 2016 297 104
- US-A1- 2017 106 447

## Beschreibung

Die vorliegende Erfindung betrifft ein Verfahren zum Herstellen eines Bauteils mittels eines additiven Fertigungsverfahrens. Die vorliegende Erfindung betrifft ein Verfahren, mit dem ein Bauteil erzeugbar ist, das aus wenigstens einem ersten Material und einem zu dem ersten Material verschiedenen zweiten Material aufgebaut wird.

In vielen Bereichen ist es von Vorteil, Bauteile mit additiven Fertigungsverfahren, wie beispielsweise dem sogenannten 3D-Druck, zu fertigen. Derartige Verfahren finden beispielsweise Verwendung in der fertigenden Industrie, im Modellbau, und der Forschung zur schnellen und kostengünstigen Fertigung von Modellen, Mustern, Prototypen, Werkzeugen und Endprodukten. Daneben gibt es beispielhafte Anwendungen im Heim- und Unterhaltungsbereich, dem Baugewerbe sowie in der Kunst und der Medizin.

Additive Fertigungsverfahren, wie etwa der 3D-Druck, ist eine Bezeichnung für derartige Fertigungsverfahren, bei dem das zum Aufbau des Bauteils verwendete Material schichtweise aufgetragen wird, um so dreidimensionale Bauteile zu erzeugen. Dieser schichtweise Aufbau erfolgt bevorzugt computergesteuert aus einem oder mehreren flüssigen oder festen Werkstoffen nach vordefinierten Maßen beziehungsweise Geometrien.

Bei dem Aufbau des Bauteils finden oftmals physikalische oder chemische Härtungs- oder Schmelzprozesse statt. Typische Werkstoffe für additive Fertigungsverfahren sind beispielswiese Kunststoffe, Kunstharze, Keramiken und Metalle.

Insbesondere bei dem Erzeugen von Bauteilen, die aus verschiedenen Materialien aufgebaut werden, und dabei etwa aus elektrisch leitfähigen Materialien und aus elektrisch isolierenden Materialien bestehen, ist es bekannt, zweistufige Prozesse zu verwenden. Bei diesen wird zunächst das Bauteil als nicht leitfähige Trägerstruktur erzeugt und anschließend in einem zusätzlichen Prozess partiell oder vollständig mit einer dünnen, elektrisch leitfähigen Struktur versehen. Das Aufbringen der elektrisch leitfähigen Struktur erfolgt beispielsweise durch Sprühlackierung, etwa mit Maskierung, durch Inkjetverfahren oder auch durch spezielle galvanische Prozesse, gesamt beziehungsweise großflächig. Dies erfolgt meist unter Verwendung einer elektrisch leitfähigen Tinte. Letztere muss gemäß dem Stand der Technik nach dem Aufbringen in einem weiteren Schritt gesintert werden, um die elektrisch leitfähigen Partikel in der Tinte zusammenzuschmelzen. Durch den Sinterprozess, der bei hohen Temperaturen erfolgt, besteht meist die Gefahr einer thermischen Verformung des Trägers.

DE 10 2014 007 562 B4 betrifft eine Vorrichtung und ein Verfahren zur Herstellung von dreidimensionalen Formteilen mit integrierter Leiterbildstruktur mittels additiver Fertigungsverfahren aus einem elektrisch leitfähigen und einem nicht leitfähigen Material, wobei sich das Formteil aus dem nicht elektrisch leitfähigen Material und der integrierten Leiterbildstruktur aus dem elektrisch leitfähigen Material zusammensetzt und das elektrisch leitfähige Material aus einer TCO-Tinte besteht. Dabei wird zunächst das Formteil aus nicht elektrisch leitfähigem Material erzeugt und anschließend die Leiterstruktur mit der TCO-Tinte erzeugt.

DE 10 2015 002 967 A1 beschreibt ein 3D-Druckwerkzeug, das derart aufgebaut ist, um 3D-Druckmaterial zu verarbeiten, welches durch Erhitzen verschmilzt, wodurch das Werkstück geformt wird, enthaltend eine Versorgungseinheit für die Zuführung des 3D-Druckmateriales für das 3D-Drucken, sowie eine Strahlungsheizung für das selektive Erhitzen des Druckmateriales, welche ausreichend ist, um das 3D-Druckmaterial zu verschmelzen, während das erhitzte 3D-Druckmaterial durch die Zuführeinheit auf das zu formende Werkstück geleitet wird. Durch Einbezug elektrisch leitfähiger Fasern können gewisse strahlungsabsorbierende und/oder reflektierende Eigenschaften erzielt werden.

DE 10 2015 110 342 A1 betrifft ein leitfähiges Element, wie beispielsweise eine Antenne, zur Verwendung in elektronischen Geräten, wie beispielsweise in Mobilgeräten, und Verfahren und Vorrichtungen zum Ausbilden des leitfähigen Elements. Gemäß einem exemplarischen Aspekt betrifft dieses Dokument eine leitfähige Antenne, die durch Aufbringen leitfähiger Fluids ausgebildet wird, sowie ein Verfahren und eine Vorrichtung zu ihrer Herstellung. In einer Ausführungsform wird eine komplexe (3D) Leiterbahn unter Verwendung von zwei oder mehr verschiedenen Drucktechniken durch Erzeugen verschiedener Bereiche innerhalb des Leiterbahnmusters auf ein zuvor ausgebildetes Bauteil ausgebildet.

US 2016/297104 A1 bezieht sich auf 3D-Drucker-Einsatzmaterialien, die Filamente mit getrennten Schichten oder Abschnitten enthalten. Diese Inputs, insbesondere Filamente, können durch Koextrusion, Mikroschicht-Koextrusion oder Mehrkomponenten-/Fraktal-Koextrusion hergestellt werden. Diese Einsatzstoffe und insbesondere Filamente ermöglichen das gleichzeitige Auftragen oder Kombinieren verschiedener Materialien durch eine oder mehrere Düsen während des sogenannten 3D-Druckverfahrens. Diese Techniken ermöglichen kleinere Schichtgrößen (im Milli-, Mikro- und Nanobereich), unterschiedliche Schichtkonfigurationen sowie die Verwendung von Materialien, die in herkömmlichen 3D-Druckverfahren nicht verwendet werden.

DE 10 2016 225 837 A1 betrifft ein Verfahren zur Herstellung eines körperstützenden Polsterungsteils mit einem Heizelement sowie ein Kraftfahrzeug. Es wird ein Verfahren zur Herstellung eines körperstützenden Polsterungsteils mit einem Heizelement zur Verfügung gestellt. Dieses umfasst die Schritte Bereitstellung einer 3D-Druckvorrichtung, insbesondere einer Vorrichtung zur Ausführung eines Fused Deposition Modeling-Verfahrens, Bereitstellung eines ersten Druckmaterials, wobei das erste Druckmaterial ein Kunststoff oder eine Kunststoff enthaltende Mischung ist, sowie eines zweiten Druckmaterials, wobei das zweite Druckmaterial ein elektrisch leitfähiges Material umfasst. Es erfolgt das Erzeugen eines Polsterungskörpers durch 3D-Drucken des ersten Druckmaterials sowie das Erzeugen eines Heizelements durch 3D-Drucken des zweiten Druckmaterials. Das Erzeugen des Polsterungskörpers und/oder des Heizelements erfolgt derart, dass der Polsterungskörper an dem Heizelement anliegt.

US 2017/106447 A1 beschreibt Herstellungsverfahren für ein dreidimensionales geformtes Objekt zur Herstellung des dreidimensionalen geformten Objekts durch Stapeln von Schichten, umfassend das Zuführen eines ersten Zuführungsobjekts, das ein erstes Material enthält, zu einem Trägerkörper und das Sintern des ersten Materials, um dadurch das erste Material zu verfestigen, um eine erste Schicht zu bilden, und das Zuführen eines zweiten Zuführungsobjekts, das ein zweites Material enthält, das einen Schmelzpunkt oder eine Sintertemperatur hat, die niedriger ist als eine Sintertemperatur des ersten Materials, um auf die erste Schicht gelegt zu werden, und das Sintern oder Schmelzen des zweiten Materials, um dadurch das zweite Material zu verfestigen, um eine zweite Schicht zu bilden.

FR 3 069 800 A1 beschreibt ein Verfahren zur Herstellung einer Lichtdekoration, das die folgenden Schritte umfasst: Festmachen eines Extruders an einem Bewegungsmittel, Heißextrudieren eines Strangs aus thermoplastischem Material durch den Extruder, Bewegen des Extruders entlang einer Bahn, so dass eine Dekorstruktur mit mindestens einer gekrümmten Kontur gebildet wird, Einbetten einer Lichterkette in mindestens einen Zielabschnitt des Strangs, wobei das Einbetten während der Bewegung des Extruders erfolgt, wenn sich der Strang in einem pastösen Zustand befindet.

Derartige aus dem Stand der Technik bekannte Lösungen können jedoch noch Verbesserungspotential aufweisen insbesondere hinsichtlich einer einfachen und/oder schonenden Herstellung von Bauteilen aus unterschiedlichen Materialien, welche gegebenenfalls besonders stabil sein können.

Es ist daher die Aufgabe der vorliegenden Erfindung, eine Maßnahme zu schaffen, durch welche wenigstens ein Nachteil des Stands der Technik zumindest teilweise überwunden wird. Es ist insbesondere eine Aufgabe der vorliegenden Erfindung ein Bauteil auszubilden, das aus mehreren Materialien aufgebaut wird, wobei das Bauteil eine hohe Stabilität aufweisen kann und/oder wobei das Verfahren einfach und/oder schonend ausführbar sein kann.

Die Lösung der Aufgabe erfolgt erfindungsgemäß durch ein Verfahren mit den Merkmalen des Anspruchs 1. Die Lösung der Aufgabe erfolgt erfindungsgemäß ferner durch eine Verwendung nach Anspruch 10. Bevorzugte Ausgestaltungen der Erfindung sind in den Unteransprüchen, in der Beschreibung, dem Beispiel und in den Figuren offenbart, wobei weitere in den Unteransprüchen oder in der Beschreibung oder den Figuren oder dem Beispiel beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Die vorliegende Erfindung betrifft ein Verfahren zum Herstellen eines Bauteils mittels eines additiven Fertigungsverfahrens, wobei das Bauteil aus wenigstens einem ersten Material und einem zu dem ersten Material verschiedenen zweiten Material aufgebaut wird, wobei das Verfahren die folgenden Schritte aufweist:
a) Schichtweises Aufbauen des Bauteils durch lokal begrenztes Aufbringen des ersten Materials und des zweiten Materials auf eine Auflagefläche; wobei
b) das schichtweise Aufbauen des Bauteils durch lokal begrenztes Aufbringen des ersten Materials und des zweiten Materials auf eine Auflagefläche entsprechend der Geometrie des herzustellenden Bauteils erfolgt, wobei
c) das erste Material und das zweite Material zumindest zum Teil auf die Auflagefläche derart aufgebracht werden, dass das zweite Material zumindest zum Teil mit dem ersten Material in Kontakt steht, wenn das erste Material eine Temperatur aufweist, die in einem Bereich liegt von ≥ 100°C, vorzugsweise von ≥ 150°C, beispielsweise von ≥ 200°C, wobei das zweite Material ein zu sinterndes Material ist und dass das erste Material und das zweite Material zumindest zum Teil auf die Auflagefläche derart aufgebracht werden, dass das zweite Material zumindest zum Teil mit dem ersten Material in Kontakt steht, wenn das erste Material noch eine Temperatur aufweist, die oberhalb der Sintertemperatur des zu sinternden Materials liegt.

Ein derartiges Verfahren erlaubt es, ein Bauteil auszubilden, das aus mehreren Materialien aufgebaut wird und das ferner besonders stabil sein kann. Darüber hinaus kann das Verfahren besonders einfach und schonend durchführbar sein.

Beschrieben wird somit ein Verfahren, das dem Herstellen eines Bauteils mittels eines additiven Verfahrens dient. Unter einem additiven Verfahren wird im Sinne der vorliegenden Erfindung ein derartiges Fertigungsverfahren beschrieben, bei dem das zum Aufbau des Bauteils verwendete Material schichtweise aufgetragen wird, um so dreidimensionale Bauteile schichtweise aufzubauen beziehungsweise zu erzeugen. Dieser schichtweise Aufbau erfolgt bevorzugt computergesteuert aus einem oder mehreren flüssigen, also geschmolzenen oder angeschmolzenen, Werkstoffen nach vordefinierten Maßen beziehungsweise Geometrien.

Additive Fertigungsverfahren nutzen unterschiedliche Materialien und Prozesstechniken, um Gegenstände schichtweise aufzubauen. Beim sogenannten Fused Deposition Modeling (FDM) beispielsweise wird ein thermoplastischer Kunststoffdraht verflüssigt und mit Hilfe einer Düse schichtweise auf einer beweglichen Bauplattform abgelegt. Beim Erstarren entsteht ein fester Gegenstand. Die Steuerung der Düse und der Bauplattform erfolgt auf der Grundlage einer CAD-Zeichnung des Gegenstands. Beispielsweise basiert die vorliegende Erfindung auf einem FDM-Verfahren, ohne jedoch darauf beschränkt zu sein.

Grundsätzlich aber nicht beschränkt hierauf umfassen typische Werkstoffe für das 3D-Drucken Kunststoffe, wie etwa Kunstharze, Keramiken, Metalle oder auch Carbon- und Graphitmaterialien. Ferner kann die additive Fertigung anstatt FDM auch andere Verfahren umfassen, wobei insbesondere das geschmolzene oder angeschmolzene und damit formbare Material zum Aufbau des Bauteils aus einer Düse ausgetragen wird.

Das in dem hier beschriebenen Verfahren hergestellte Bauteil ist ferner dadurch gekennzeichnet, dass es nicht nur aus einem Material besteht, sondern dass es aus zwei, und damit zwei oder mehr als zwei, von einander verschiedenen Materialien aufgebaut wird. Die genannten Materialien, können gegebenenfalls jeweils für sich einerseits aus mehreren Materialien beziehungsweise aus einer Materialmischung zusammengesetzt sein sowie auch einzelne Feststoffpartikel enthalten. Durch das Ausbilden des Bauteils aus wenigstens zwei unterschiedlichen Materialien kann es ermöglicht werden, dass das Bauteil nicht durch das gesamte Bauteil homogene Eigenschaften aufweist, sondern insbesondere lokal begrenzt sich unterscheidende, beispielsweise physikalische, Eigenschaften aufweisen kann. Beispielsweise aber nicht begrenzt hierauf können die unterschiedlichen Eigenschaften Reibwerte, mechanische Stabilität, elektrische Leitfähigkeit, thermische Leitfähigkeit, magnetische Eigenschaften, Dichte, Härte, Verschleißfestigkeit, Temperaturbeständigkeit oder auch Farbe sein. Somit kann das Bauteil beispielsweise lokale Strukturen aufweisen, bei denen das Material begrenzt etwa hinsichtlich der vorgenannten Eigenschaften heterogen ist, ohne hierauf begrenzt zu sein.

Das beschriebene Verfahren zum Herstellen eines derartigen Bauteils umfasst die folgenden Schritte.

Gemäß Verfahrensschritt a) erfolgt ein schichtweises Aufbauen des Bauteils durch lokal begrenztes Aufbringen des ersten Materials und des zweiten Materials auf eine Auflagefläche. Grundsätzlich soll somit ein additives Verfahren durchgeführt werden und somit beispielweise anhand von digitalen Daten das Bauteil mit den unterschiedlichen Materialien entsprechend einer vorgebbaren Geometrie aufgebaut werden. Entsprechend ist es gemäß Verfahrensschritt b) vorgesehen, dass das schichtweise Aufbauen des Bauteils durch lokal begrenztes Aufbringen des ersten Materials und des zweiten Materials auf eine Auflagefläche entsprechend der Geometrie des herzustellenden Bauteils erfolgt und damit entsprechend der Form und Größe des herzustellenden Bauteils.

Ferner ist es gemäß Verfahrensschritt c) vorgesehen, dass das erste Material und das zweite Material zumindest zum Teil auf eine Auflagefläche derart aufgebracht werden, dass das zweite Material zumindest zum Teil mit dem ersten Material in Kontakt steht, wenn das erste Material eine Temperatur aufweist, die in einem Bereich liegt von ≥ 100°C. Unter einer Auflagefläche kann dabei etwa ein Substrat verstanden werden, auf dem das Bauteil ausgebildet werden soll, oder auch eine bereits aufgebaute Schicht des ersten und/oder des zweiten Materials.

Insbesondere dadurch, dass wie vorstehend erläutert, das erste Material und das zweite Material zumindest zum Teil auf eine Auflagefläche derart aufgebracht werden, dass das zweite Material zumindest zum Teil mit dem ersten Material in Kontakt steht, wenn das erste Material eine Temperatur aufweist, die in einem Bereich liegt von ≥ 100°C, vorzugsweise von ≥ 150°C, etwa von ≥ 200°C, können gegenüber den Lösungen aus dem Stand der Technik signifikante Vorteile ermöglicht werden.

Denn das hier beschriebene Verfahren ermöglicht es, dass die unterschiedlichen Materialien aufgrund der Hitzeeinwirkung in Abhängigkeit der verwendeten Materialien nicht nebeneinander vorliegen müssen, sondern gegebenenfalls in einer Ausgestaltung, dass das zweite Material in das erste Material zumindest zum Teil, etwa in eine Grenzschicht, eingebracht wird. Dadurch kann eine besonders hohe Stabilität erreicht werden, da es sich gezeigt hat, dass durch das beschriebene Verfahren das zweite Material an dem bzw. an den Randschichten in dem ersten Material nach dem Erhärten besonders fest haftet, somit hohe Adhäsionskräfte wirken. Dies wird insbesondere dadurch ermöglicht, dass das zweite Material in das erste Material zumindest zum Teil eindringt, wenn das erste Material durch die hohe Temperatur formbar ist und nicht, wie im Stand der Technik bekannt, das zweite Material neben dem ersten Material beziehungsweise auf dem ersten Material angeordnet wird, wenn das erste Material bereits erhärtet ist. Somit kann das erzeugte Bauteil auch bei dem Vorsehen von zwei oder mehr als zwei Materialien eine hohe mechanische Festigkeit aufweisen wobei die Gefahr einer reduzierten Festigkeit an der Grenzfläche von erstem zu zweitem Material zumindest deutlich reduziert wird.

Darüber hinaus kann das Bauteil durch das hier beschriebene Verfahren einfach herstellbar sein. Denn durch das Einstellen der Verfahrensparameter kann eine gute Stabilität ohne weitere Prozessschritte ermöglicht werden. Insbesondere kann auf eine Nachbehandlung zur Stabilisierung der Bauteile verzichtet werden was eine negative Beeinflussung der Materialien durch die Nachbehandlung verhindern kann. Somit kann das hier beschriebene Verfahren insbesondere für das erste Material und das zweite Material besonders schonend sein.

Darüber hinaus ist es möglich, dass die Temperatur des ersten Materials sich vorteilhaft auf das zweite Material auswirkt. Dies kann, ohne jedoch hierauf beschränkt zu sein, etwa bei dem Ausbilden von elektrisch leitfähigen Strukturen zum Tragen kommen, wie dies nachstehend beschrieben ist, ohne jedoch hierauf beschränkt zu sein.

Denn oftmals ist es bei dem Ausbilden von Bauteilen von Vorteil, wenn Materialien einer thermischen Nachbehandlung unterzogen werden. Dies beispielsweise, um gewünschte Eigenschaften des jeweiligen Materials zu erzeugen. Beispielsweise kann die thermische Nachbehandlung des Materials eine Härtung oder ein Sintern sein. Dadurch, dass bei dem hier beschriebenen Verfahren das zweite Material mit dem ersten Material in Kontakt steht, wenn das erste Material eine Temperatur aufweist, die in einem Bereich liegt von ≥ 100°C, beispielsweise von ≥ 150°C, besonders bevorzugt von ≥ 200°C, kann diese thermische Nachbehandlung, wie etwa ein Härten und/oder ein Sintern, unmittelbar bei der Herstellung des Bauteils erfolgen.

Durch das hier beschriebene Verfahren wird es somit möglich, auf eine separate thermische Behandlung als weiteren Verfahrensschritt zu verzichten. Dadurch kann das beschriebene Verfahren mit einem reduzierten Zeitaufwand aber auch besonders kostengünstig durchgeführt werden. Darüber hinaus kann die Peripherie beziehungsweise der apparative Aufwand für das hier beschriebene Verfahren sehr einfach ausgebildet sein.

Es ist vorgesehen, dass das zweite Material ein zu sinterndes Material ist und dass das erste Material und das zweite Material zumindest zum Teil auf die Auflagefläche derart aufgebracht werden, dass das zweite Material zumindest zum Teil mit dem ersten Material in Kontakt steht, wenn das erste Material noch eine Temperatur aufweist, die oberhalb der Sintertemperatur des zu sinternden Materials liegt. Unter einem zu sinternden Material kann insbesondere ein derartiges Material verstanden werden, das einem Sinterschritt unterzogen werden kann und soll.

Durch den Temperatureinfluss des ersten Materials auf das zweite Material kann bereits ein Sinterschritt erfolgen. Für das nicht beschränkende Beispiel einer leitfähigen Tinte etwa kann das Ausbilden einer zusammenhängenden elektrisch leitfähigen Struktur ermöglicht werden. Allerdings ist der Sinterschritt in keiner Weise auf leifähige Tinten beschränkt.

Durch den Temperatureinfluss des ersten Materials anstatt eines weiteren Sinterschritts kann die Temperaturbehandlung reduziert und damit ein besonders schonendes Verfahren ohne einen weiteren Verfahrensschritt ermöglicht werden. Somit ist insbesondere eine derartige Kombination von Vorteil, bei der ein Sintern des zweiten Materials erfolgen kann bei einer Temperatur, bei der das erste Material noch unterhalb einer Zersetzungstemperatur des ersten Materials liegt.

Es kann bevorzugt sein, dass das zweite Material mit dem in einer Temperatur von ≥ 100°C vorliegenden ersten Material vor dem Aufbringen des ersten Materials auf die Auflagefläche in Kontakt kommt, so dass das erste Material und das zweite Material in einem Schritt gemeinsam auf die Auflagefläche aufgebracht werden. In dieser Ausgestaltung wird somit das erste Material mit dem zweiten Material gemeinsam in einem Schritt auf die Auflagefläche aufgebracht, was einen weiteren Verfahrensschritt einsparen kann. Im Detail kann durch das Aufbringen des ersten Materials und des zweiten Materials gemeinsam in einem Verfahrensschritt beispielsweise das Aufbringen des zweiten Materials als separater Verfahrensschritt umgangen werden, was die Effizienz des Verfahrens steigern kann. Darüber hinaus kann der Temperatureinfluss des ersten Materials auf das zweite Materials über einen langen Zeitraum stattfinden, was eine besonders intensive Temperaturbehandlung ermöglicht.

Alternativ oder zusätzlich kann es vorgesehen sein, dass das zweite Material mit dem in einer Temperatur von ≥ 100°C vorliegenden ersten Material in Kontakt kommt, nachdem das erste Material auf die Auflagefläche aufgebracht wurde oder wenn das erste Material auf die Auflagefläche aufgebracht wird. Dabei kann grundsätzlich zunächst das erste Material und dann das zweite Material oder zunächst das zweite Material und dann das erste Material auf die Auflagefläche aufgebracht werden. In dieser Ausgestaltung kann somit das zweite Material beispielsweise unmittelbar nach dem ersten Material aufgebracht werden oder umgekehrt. Es können höchst definierte Strukturen erzeugt werden, da die Positionierung des zweiten Materials besonders definiert steuerbar ist, wenn das erste Material bereits auf der Auflagefläche vorliegt.

Es kann weiterhin vorgesehen sein, dass mit dem zweiten Material wenigstens eine Oberflächenstruktur des Bauteils erzeugt wird. In dieser Ausgestaltung kann somit ein definiertes Aufbringen des zweiten Materials an der Oberfläche des Bauteils ermöglicht werden, was anwendungsbedingt, etwa zum Ausbilden von elektrisch leitfähigen Strukturen an der Oberfläche des Bauteils aber auch für andere Heterogenitäten der Eigenschaften des Bauteils, von großem Vorteil sein kann.

Alternativ oder zusätzlich kann es vorgesehen sein, dass mit dem zweiten Material eine innere Struktur des Bauteils erzeugt wird. Auch in dieser Ausgestaltung, nämlich dem definierten Anordnen des zweiten Materials im inneren Volumen des Bauteils, können anwendungsspezifische Vorteile erreicht werden und die Anwendungsvielfalt eines mit dem erfindungsgemäßen Verfahren hergestellten Bauteils verbessert werden.

Somit kann es vorgesehen sein, dass mit dem zweiten Material nur eine innere Struktur des Bauteils erzeugt wird, dass mit dem zweiten Material nur eine Oberflächenstruktur des Bauteils erzeugt wird oder dass mit dem zweiten Material eine innere Struktur des Bauteils erzeugt wird und dass mit dem zweiten Material eine Oberflächenstruktur des Bauteils erzeugt wird.

Es kann ferner vorgesehen sein, dass das erste Material nicht elektrisch leitfähig ist und dass das zweite Material elektrisch leitfähig ist. In dieser Ausgestaltung kann es somit ermöglicht werden, dass ein Substrat aus nicht elektrisch leitendem Material mit elektrisch leitfähigen Strukturen versehen wird. Derartige Gebilde sind für viele Anwendungen von großem Vorteil. Rein beispielhaft seien hier Leiterplatten, Metamaterialabsorber, Antennen, etwa für Hochfrequenzanwendungen genannt, ohne jedoch hierauf beschränkt zu sein.

Unter einer elektrisch leitfähigen Struktur kann im Sinne der Erfindung insbesondere eine derartige Struktur verstanden werden, die eine Materialleitfähigkeit von ≥10³S/m, beispielsweise ≥ 10⁴ S/m aufweist.

Mit Bezug auf ein elektrisch leitfähiges Material kann es vorgesehen sein, dass das zweite Material eine Leittinte ist. Insbesondere diese Ausgestaltung ermöglicht es, dass eine besonders stabile Struktur einhergehend mit einem einfachen Verfahren erzeugt werden kann. Denn aus dem Stand der Technik ist es bekannt, dass insbesondere die Verwendung von Leittinten mit Partikeln mit größeren Partikeldurchmessern, etwa in einem Bereich von 30 µm einen nachträglichen Schritt des Sinterns benötigt, um die in Leittinten vorhandenen elektrisch leitfähigen Partikel zu versintern und so eine zusammenhängende elektrisch leitfähige Struktur auszubilden. Ein derartiger Sinterschritt beziehungsweise eine hiermit einhergehende Temperaturbehandlung ist nun aber gemäß dem Stand der Technik zum einen ein zusätzlicher Prozessschritt und kann zum anderen das erste Material beschädigen oder negativ beeinflussen, insbesondere verformen. Erfindungsgemäß kann dieser zusätzliche Schritt gerade verhindert werden.

Somit sind die im Stand der Technik eingesetzten Leittinten mit Nanopartikeln hingegen deutlich teurer und aufwändiger herzustellen, als eine Verwendung entsprechender Leittinten mit dem erfindungsgemäßen Verfahren. Gemäß der Erfindung können diese Nachteile überwunden werden, wie dies vorstehend mit Bezug auf einen Sinterschritt im Detail beschrieben ist.

Grundsätzlich können an sich bekannte Leittinten, wie etwa TCO-Tinten (TCO, transparent conductive oxide), verwendet werden.

Jedoch ist das zweite Material als elektrisch leitfähiges Material in keiner Weise auf Leittinten beschränkt. Weitere Möglichkeiten umfassen etwa elektrisch leitfähige Partikel, leitfähige Pasten, wie etwa Lotpasten, oder andere leitfähigen Materialien. Grundsätzlich können bei elektrisch leitfähigen zweiten Materialien insbesondere Metalle oder elektrisch leitfähige Kunststoffe von Vorteil sein.

Es kann weiterhin grundsätzlich vorgesehen sein, dass sich das erste Material und das zweite Material in wenigstens einer Eigenschaft unterscheiden, die ausgewählt ist aus der Gruppe bestehend aus elektrische Leitfähigkeit; thermische Leitfähigkeit; magnetische Eigenschaften; mechanische Eigenschaften wie z.B. E-Modul, Steifigkeit Nachgiebigkeit; oberflächenverändernde Eigenschaften wie z.B. Härte, Rauheit, Haptik, Benetzungsverhalten, Korrosionseigenschaften; tribologische Eigenschaften wie z.B. Reibwerte, Verschleißeigenschaften; Ästhetische Eigenschaften wie z.B. Farbe; partikelbeinhaltenden Eigenschaften wie z.B. unterschiedliche Partikeldurchmesser; optische Eigenschaften wie z.B. Absorptionsgrad, Reflektionsverhalten. Insbesondere in dieser Ausgestaltung lassen sich Bauteile mit heterogenen Eigenschaften ausbilden, die ein großes Anwendungsgebiet aufweisen und bei denen die Erfindung sehr effektiv anwendbar ist.

Besonders bevorzugt unterscheiden sich das erste Material und das zweite Material um ≥ 10%, vorzugsweise um ≥ 20%, etwa um ≥ 50%, bezogen auf den kleineren Wert der unterschiedlichen Parameter, in der jeweiligen Eigenschaft beziehungsweise in dem jeweiligen Parameter.

In dieser Ausgestaltung lässt sich das Bauteil in einer Vielzahl von Eigenschaften maßschneidern und heterogene Strukturen anordnen, was die Anwendungsvielfalt besonders groß gestaltet. Dabei können sämtlichen Anwendungen eine einfache Herstellung und eine stabile Ausgestaltung des erzeugten Bauteils gemein sein.

Hinsichtlich des ersten Materials kann es vorgesehen sein, dass das erste Material ausgewählt ist aus der Gruppe bestehend aus Metallen, wie etwa in der Form von Filamenten und/oder zur Herstellung von Edelstahlteilen, aus Keramiken, wie etwa Zyrkonoxydkeramit, oder aus insbesondere thermoplastischen Kunststoffen, wie etwa Polylactide (PLA), Polycarbonate (PC), Acrylnitril-Butadien-Styrol-Copolymere (ABS), oder auch Carbon- oder Graphitmaterialien. Derartige Materialien können für eine Vielzahl von Anwendungen stabile Bauteile ausbilden und sind ferner durch ein hier beschriebenes Verfahren gut verarbeitbar. Insbesondere lassen sich derartige Materialien gut durch additive Verfahren bearbeiten und mit anderen Materialien kombinieren.

Hinsichtlich weiterer Vorteile und technischer Merkmale des Verfahrens wird auf die Beschreibung der Vorrichtung, die Verwendung auf die Figuren und auf die Beschreibung der Figuren verwiesen.

Beschrieben wird ferner eine Vorrichtung zum Herstellen eines Bauteils mittels eines additiven Fertigungsverfahrens, wobei das Bauteil aus wenigstens einem ersten Material und einem zu dem ersten Material verschiedenen zweiten Material aufgebaut wird, wobei die Vorrichtung einen Träger zum Aufbauen des Bauteils umfasst und eine erste Austragevorrichtung zum Austragen des ersten Materials und zum Anordnen des ersten Materials auf dem Träger aufweist, wobei die Vorrichtung ferner Mittel zum Austragen des zweiten Materials aufweist zum Durchführen eines Verfahrens, wie dies vorstehend im Detail beschrieben ist.

Eine derartige Vorrichtung erlaubt es somit, auf einfache Weise ein Bauteil auszubilden, das aus wenigstens zwei unterschiedlichen Materialien aufgebaut ist und dabei eine hohe mechanische Stabilität aufweist.

Die Vorrichtung dient somit insbesondere dazu, ein Bauteil mittels eines additiven Fertigungsverfahrens auszubilden. Insbesondere dient die Vorrichtung dazu, ein FDM-Verfahren auszubilden und weist grundsätzlich entsprechende dem Fachmann bekannte Mittel auf.

Die Vorrichtung umfasst einen Träger zum Ausbilden des Bauteils und entsprechend zum Tragen des hergestellten Bauteils. Auf diesem Träger kann das Bauteil somit aufgebaut werden, indem das erste Material und das zweite Material auf diesen Träger ausgebracht werden und das Bauteil schichtweise additiv aufgebaut wird. Somit kann der Träger als Auflagefläche dienen. Das schichtweise Aufbauen des Bauteils kann gemäß vordefinierter Daten durch eine Steuereinheit gesteuert werden. Die Daten repräsentieren dabei das aufzubauende Bauteil und sie können etwa in einem Speicher der Steuereinheit gespeichert sein. Es kann ferner möglich sein, dass die Daten über eine drahtlose Datenverbindung, etwa aus einer Cloud, abgerufen werden. Entsprechend können Kommunikationsmittel für eine drahtlose Datenverbindung Teil der Vorrichtung sein.

Für das schichtweise Aufbauen des Bauteils umfasst die Vorrichtung eine erste Austragevorrichtung zum Austragen des ersten Materials und zum Anordnen des ersten Materials auf dem Träger. Die Austragevorrichtung kann beispielsweise eine Düse sein, die mit einem Behältnis für das erste Material verbunden ist. Die Austragvorrichtung, etwa umfassend die Düse, kann insbesondere dreidimensional steuerbar sein, so dass das erste Material stets an der zur Ausbildung des Bauteils geeigneten Position austragbar ist.

Es ist ferner vorgesehen, dass die Vorrichtung Mittel zum Ausbringen des zweiten Materials aufweist zum Durchführen eines vorbeschriebenen Verfahrens. Somit dienen diese Mittel dazu, dass das zweite Material mit dem ersten Material in Kontakt steht, wenn das erste Material eine Temperatur aufweist, die in einem Bereich liegt von ≥ 100°C. Entsprechend können die Vorteile erzielt werden, wie diese vorstehend mit Bezug auf das Verfahren beschrieben werden.

Grundsätzlich gibt es verschiedene Möglichkeiten, die Vorrichtung beziehungsweise insbesondere das oder die Mittel zum Ausbringen des zweien Materials auszubilden. Es kann jedoch bevorzugt sein, dass das oder die Mittel zum Ausbringen des zweien Materials mit einer Kühleinrichtung versehen sind oder gekühlt werden können. Dadurch kann sichergestellt werden, dass das zweite Material nicht etwa durch eine räumliche Nähe der Düse für das erste Material bereits vor dem Austragen aus dem Mittel oder den Mitteln derart erhitzt wird, dass eine Härtung und/oder ein Sintern stattfindet.

Beispielsweise kann es vorgesehen sein, dass die Vorrichtung einen Mischanschluss aufweist, durch den zweites Material gemeinsam mit erstem Material durch die erste Austragevorrichtung austragbar ist und der insbesondere derart ausgestaltet ist, dass zweites Material gemeinsam mit erstem Material durch die erste Austragevorrichtung austragbar ist, beispielsweise indem zweites Material in die erste Austragevorrichtung einbringbar ist, so dass zweites Material mit erstem Material in der ersten Austragevorrichtung in Kontakt kommt. In dieser Ausgestaltung wird somit erreicht, dass das zweite Material gemeinsam mit dem ersten Material ausgetragen wird.

Diesbezüglich kann es vorgesehen sein, dass der Mischanschluss an der ersten Austragevorrichtung vorgesehen ist. Dies erlaubt eine besonders einfache Steuerung der Vorrichtung, da der Mischanschluss gemeinsam mit der ersten Austragevorrichtung bewegt werden kann, so dass keine separate Steuerung zur Bewegung einer zweiten Austragevorrichtung notwendig ist. Darüber hinaus kann die Vorrichtung in dieser Ausgestaltung besonders einfach ausbildbar sein. Beispielsweise kann der Mischanschluss Teil einer Düse zum Austragen des ersten Materials sein oder kann der Mischanschluss stromaufwärts der Düse angeordnet sein.

Weiterhin kann es vorgesehen sein, dass die Vorrichtung eine zweite Austragevorrichtung zum Austragen des zweiten Materials aufweist. In dieser Ausgestaltung können grundsätzlich zwei verschiedene Austragvorrichtungen, wie etwa zwei Düsen, vorgesehen sein, oder die zweite Austragvorrichtung kann gemeinsam mit der ersten Austragvorrichtung als zusammenhängendes Bauteil ausgebildet sein. In dieser Ausgestaltung wird es somit ermöglicht, dass auch das zweite Material auf die Auftragsfläche ausgetragen wird, also insbesondere auf bereits ausgetragenes erstes Material oder den Träger, oder dass erstes Material auf bereits ausgetragenes zweites Material ausgetragen wird. Entsprechend ist es vorgesehen, dass die zweite Austragvorrichtung benachbart zu der ersten Austragvorrichtung angeordnet ist.

Hinsichtlich weiterer Vorteile und technischer Merkmale der Vorrichtung wird auf die Beschreibung des Verfahrens, die Verwendung, auf die Figuren und auf die Beschreibung der Figuren verwiesen.

Beschrieben wird ferner die Verwendung eines Verfahrens oder einer Vorrichtung wie vorstehend beschrieben zum Herstellen eines elektrisch nicht leitenden Bauteils mit einer elektrisch leitfähigen Struktur.

Wie vorstehend in größerem Detail beschrieben ermöglicht das vorbeschriebene Verfahren wie auch die vorbeschriebene Vorrichtung ein einfaches Herstellen eines Bauteils aus wenigstens zwei unterschiedlichen Materialien, wobei das Bauteil besonders stabil ausgebildet wird. Insbesondere vorteilhaft lassen sich elektrisch leitfähige Strukturen auf elektrisch nicht leitenden Grundkörpern ermöglichen.

Beispielsweise im Bereich der Hochfrequenztechnik finden sich seit einiger Zeit spezielle Anwendungen für additive Fertigungsverfahren auch für Antennen für Mikrowellenkomponenten. Dabei wird das Werkstück zunächst als nichtleitende Trägerstruktur aus Kunststoff gefertigt und anschließend in einem zusätzlichen Prozess partiell oder vollständig mit einer dünnen, leitfähigen Schicht versehen. Das Aufbringen der Schicht erfolgt beispielsweise durch Sprühlackierung, etwa mittels Maskierung, durch Inkjetverfahren oder auch durch spezielle galvanische Verfahren. Derartige leitfähige Schichten können auch als Metallisierung bezeichnet werden.

Leitfähige Tinte ist ferner eine Tinte, die beispielsweise auf einen nichtleitenden Gegenstand strukturförmig aufgedruckt wird, so dass die Struktur den Strom leitet. Typische Anwendungen sind beispielsweise gedruckte Leiterbahnen. Leitfähige Tinte entsteht typischer Weise durch das Einbringen von Graphit oder anderen leitfähigen Materialien, wie etwa Silberpartikeln, in die Tinte. Nach dem Druckauftrag der Tinte kann dabei gegebenenfalls durch einen Sinterprozess das Zusammenschweißen der leitfähigen Partikel bei Temperaturen von unterhalb des entsprechenden Schüttmetall-Schmelzpunktes erfolgen, bei dem es sich nicht um einen Phasenwechsel zwischen Festkörper und Flüssigkeit, sondern um Phänomene der Oberflächendiffusion handelt. Bei leitfähiger Tinte (z.B. Grafit) mit Nanopartikeln kann gegebenenfalls auf ein Sintern verzichtet werden. Bei größeren Partikeln, beispielsweise bei Silberpartikeln mit etwa 30µm Partikeldurchmesser, muss gesintert werden.

Der herkömmliche Ansatz zum Sintern von leitfähiger Tinte besteht darin, entweder den Gegenstand mit Tinte auf einer Heizplatte oder in einem Ofen zu erwärmen. Andere Möglichkeiten sind Lasersintern, Plasmasintern oder Mikrowellensintern. Eine Beschädigung des Substratmaterials ist durch die Temperaturzuführung möglich.

Anwendungsmöglichkeiten in der Hochfrequenztechnik sind neben der Herstellung von gedruckten Leiterbahnen auch die Herstellung von gedruckten Antennen oder gedruckten Baugruppen für die Mikrowellentechnik. Planar gedruckte Antennen, beispielsweise auf Folie oder Papier, findet man bei RFID-Anwendungen (radio frequency Identification).

Weitere sehr interessante Anwendungen sind möglich, wenn das Ausbringen der Metallisierung nicht nur planar sondern dreidimensional erfolgen kann. Ebenso wenn die leitfähige Struktur unmittelbar während des Druckprozesses in die Trägerstruktur aus nichtleitendem Material, insbesondere Kunststoff, eingebracht werden kann. Hierdurch lassen sich komplizierte Werkstücke auf vergleichsweise einfache Art und Weise herstellen.

Durch das Verfahren beziehungsweise die Vorrichtung wie beschrieben wird es dabei vorteilhaft möglich, dass das additive Verfahren und der Metallisierungsprozess quasi verzögerungsfrei gemeinsam erfolgen. Hierdurch lassen sich leitfähige Strukturen einfach in die Trägerstruktur einbringen, was bei einem getrennten Prozess nicht oder nur schwer möglich ist.

Hinsichtlich weiterer Vorteile und technischer Merkmale der Verwendung wird auf die Beschreibung des Verfahrens, die Vorrichtung, auf die Figuren und auf die Beschreibung der Figuren verwiesen.

Nachfolgend wird die Erfindung unter Bezugnahme auf die anliegenden Zeichnungen und Beispiele exemplarisch erläutert, wobei die nachfolgend dargestellten Merkmale sowohl jeweils einzeln als auch in Kombination einen Aspekt der Erfindung darstellen können, und wobei die Erfindung nicht auf die folgende Zeichnung, die folgende Beschreibung und das folgende Ausführungsbeispielbeschränkt ist.

Es zeigen:
Fig. 1 eine schematische Darstellung einer ersten Ausgestaltung einer Vorrichtung zur Durchführung eines Verfahrens gemäß einer ersten Ausgestaltung der Erfindung;
Fig. 2 eine schematische Darstellung einer weiteren Ausgestaltung einer Vorrichtung zur Durchführung eines Verfahrens gemäß einer weiteren Ausgestaltung der Erfindung;
Fig. 3 eine schematische Darstellung einer weiteren Ausgestaltung einer Vorrichtung zur Durchführung eines Verfahrens gemäß einer weiteren Ausgestaltung der Erfindung;
Fig. 4 eine schematische Darstellung einer weiteren Ausgestaltung einer Vorrichtung zur Durchführung eines Verfahrens gemäß einer weiteren Ausgestaltung der Erfindung; und
Fig. 5 eine schematische Darstellung einer weiteren Ausgestaltung einer Vorrichtung zur Durchführung eines Verfahrens gemäß einer weiteren Ausgestaltung der Erfindung.

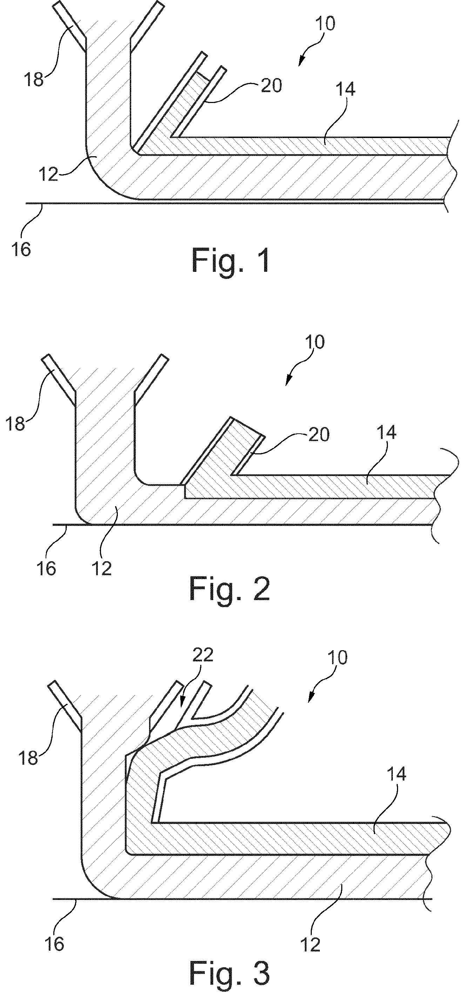

In der Figur 1 ist eine Vorrichtung 10 zum Durchführen eines erfindungsgemäßen Verfahrens gezeigt. Insbesondere dient die Vorrichtung 10 dem Herstellen eines Bauteils mittels eines additiven Fertigungsverfahrens, wobei das Bauteil aus wenigstens einem ersten Material 12 und einem zu dem ersten Material 12 verschiedenen zweiten Material 14 aufgebaut wird.

Hierzu umfasst die Vorrichtung 10 einen Träger 16 zum Aufbauen des Bauteils und eine erste Austragevorrichtung 18 zum Austragen des ersten Materials 12 und zum Anordnen des ersten Materials 12 auf dem Träger 16.

Die Vorrichtung 10 weist ferner Mittel zum Austragen des zweiten Materials 14 auf.

In der Ausgestaltung nach Figur 1 ist es vorgesehen, dass die Vorrichtung 10 eine zweite Austragevorrichtung 20 zum Austragen des zweiten Materials 14 auf das ausgetragene erste Material 12 aufweist. Dabei ist die zweite Austragvorrichtung 20 gemäß Figur 1 unmittelbar an der ersten Austragvorrichtung 18 angeordnet, so dass die erste Austragvorrichtung 18 und die zweite Austragvorrichtung 20 ein gemeinsames Bauteil ausbilden können. Dabei kann es in Abhängigkeit der verwendeten Materialien 12, 14 und der Verfahrensparamater möglich sein, dass das zweite Material 14 zumindest zum Teil unter Verdrängung des ersten Materials 12 in dieses eingebracht wird. Es ist jedoch gleichermaßen möglich, dass das erste Material 12 seine Form und Ausdehnung behält und das zweite Material 14 vollständig auf das erste Material 12 aufgebracht wird.

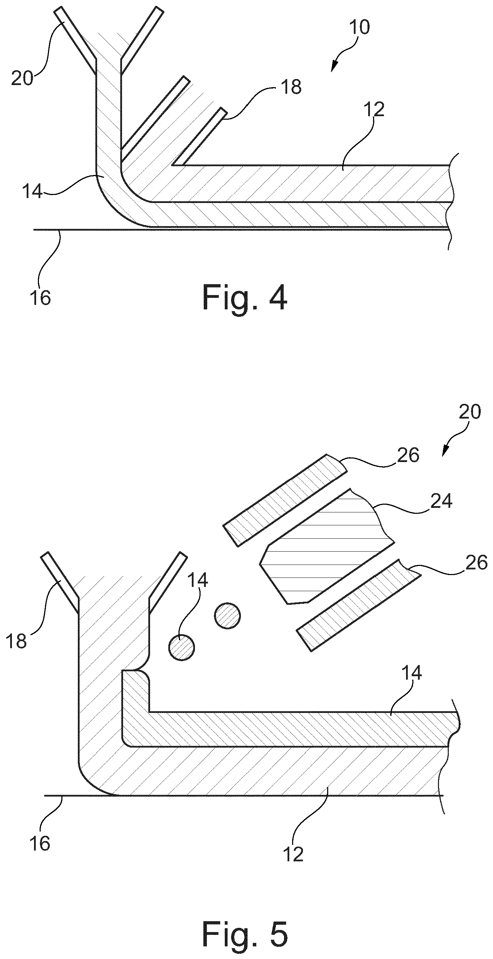

Figur 4 zeigt eine zu Figur 1 entsprechende Ausgestaltung der Vorrichtung 10, bei der jedoch die erste Austragvorrichtung 18 und die zweite Austragvorrichtung 20 vertauscht sind, so dass das erste Material 12 auf das zuvor ausgebrachte zweite Material 14 aufgebracht beziehungsweise unter Umständen zum Teil in dieses eingebracht wird.

In der Ausgestaltung nach Figur 2 ist es wiederum vorgesehen, dass die Vorrichtung 10 eine zweite Austragevorrichtung 20 zum Austragen des zweiten Materials 14 in das ausgetragene erste Material 12 aufweist. Dabei ist die zweite Austragvorrichtung 20 gemäß Figur 2 jedoch getrennt von der ersten Austragvorrichtung 18 ausgebildet, aber benachbart zu dieser angeordnet, so dass das erste Material 12 und das zweite Material 14 zumindest zum Teil auf die Auflagefläche derart aufgebracht werden, dass das zweite Material 14 zumindest zum Teil mit dem ersten Material 12 in Kontakt steht, wenn das erste Material 12 eine Temperatur aufweist, die in einem Bereich liegt von ≥ 100°C.

In der Ausgestaltung nach Figur 3 ist es vorgesehen, dass die Vorrichtung 10 einen Mischanschluss 22 aufweist, durch den zweites Material 14 in das erste Material 12 einbringbar ist oder neben dem ersten Material 12 positionierbar ist, bevor das erste Material 12 durch die erste Austragevorrichtung 18 auf den Träger 16 ausgetragen wird. Genauer ist es vorgesehen, dass der Mischanschluss 22 an der ersten Austragevorrichtung 18 vorgesehen ist. Dadurch können das erste Material 12 und das zweite Material 14 gemeinsam auf den Träger 16 aufgebracht werden.

In der Figur 5 ist eine weitere Ausgestaltung der Vorrichtung 10 gezeigt. In der Ausgestaltung der Figur 5 ist eine berührungslose Düseneinheit 24 als zweite Austragvorrichtung 20 gezeigt, wie etwa ein Jetventil bzw. ein Tropfenerzeuger. Die berührungslose Düseneinheit 24 ist dabei von Kühlelementen 26 umgeben, um so das zweite Material zu kühlen, beispielsweise, um zu verhindern, dass das zweite Material vor einem Aufbringen auf den Träger 16 aushärtet. Es sei erwähnt, dass Kühlelemente 26 beziehungsweise eine Kühleinheit grundsätzlich an jeglicher zweiten Austragvorrichtung 20 vorgesehen sein kann. Durch eine derartige zweite Austragvorrichtung 20 nach Figur 5 kann das zweite Material 14, beispielweise in Form von Tröpfchen, etwa Tintentröpfchen, in das noch formbare erste Material 12 oder eine Grenzschicht desselben, beispielsweise in flüssiges Filament als erstes Material 12, eingetragen werden oder an dieses angelegt werden. Dadurch, dass das erste Material 12 noch eine hohe Temperatur aufweist, wird diese Wärme ausgenutzt um den Sinterprozess des zweiten Materials 14 durchzuführen.

Mit einer derartigen Vorrichtung 10 ist ein Verfahren mit den folgenden Schritten ausführbar.
a) Schichtweises Aufbauen des Bauteils durch lokal begrenztes Aufbringen des ersten Materials 12 und des zweiten Materials 14 auf eine Auflagefläche insbesondere und zumindest teilweise des Trägers; wobei
b) das schichtweise Aufbauen des Bauteils durch lokal begrenztes Aufbringen des ersten Materials 12 und des zweiten Materials 14 auf eine Auflagefläche entsprechend der Geometrie des herzustellenden Bauteils erfolgt, wobei
c) das erste Material 12 und das zweite Material 14 zumindest zum Teil auf die Auflagefläche derart aufgebracht werden, dass das zweite Material zumindest zum Teil mit dem ersten Material 12 in Kontakt steht, wenn das erste Material 12 eine Temperatur aufweist, die in einem Bereich liegt von ≥ 100°C.

Das Verfahren beziehungsweise die Vorrichtung kann grundsätzlich durch eine Steuereinheit gesteuert werden basierend auf Daten betreffend die Geometrie des herzustellenden Bauteils.

Beispielsweise kann das Verfahren wie folgt ablaufen.

Filament oder Granulat als erstes Material 12 wird erwärmt und durch eine Filamentdüse als erste Austragvorrichtung 18 gepresst und anschließend in heißem Zustand schichtweise die Auflagefläche beziehungsweise den Träger 16 aufgetragen.

Als zweite Austragvorrichtung 20 kann eine Nadel zum berührenden Auftrag oder eine Düse zum berührungslosen Aufbringen des zweiten Materials 14, wie etwa einer leitfähigen Tinte oder der Tintentröpfchen, in das noch heiße und damit formbare Filament des ersten Materials 12 dienen. In beiden Fällen befinden sich Düse oder Nadel räumlich sehr nahe an der Filamentdüse. Beim berührungslosen Auftrag werden die Tintentröpfchen in das noch flüssige Filament "geschossen". Dadurch, dass das Filament noch sehr heiß ist, wird diese Wärme ausgenutzt um den Sinterprozess in der Tinte auszuführen.

Der gemeinsame Druckprozess kann hierbei entweder horizontal oder auch dreidimensional sein. Durch den nahezu gleichzeitigen Prozess des Filamentdrucks und des Tintendrucks findet unter Ausnutzung der noch vorhandenen Wärme des erwärmten 3D-Materials die Sinterung der Tinte statt.

### Beispiel:

Im Folgenden wird ein Ausführungsbeispiel in der Ausgestaltung nach Figur 4 gezeigt.

Der Aufbau zur Durchführung des Verfahrens umfasst als Hauptkomponente einen handelsüblichen FDM-Drucker. Der FDM-Drucker ist dabei mit einer standardisierten Ø 0,8 mm Düse als erste Austragvorrichtung für das erste Material 12 ausgestattet.

Daran angebunden befindet sich die zweite Austragvorrichtung 20 für das zweite Material 14 in Form einer geraden Dosiernadel mit einem Nadeldurchmesser von Ø 0,5 mm. Die Anordnung der Dosiernadel zur Düse weist dabei einen deckungsgleichen Versatz von 3 mm in Druckrichtung mit einer zusätzlichen Höhendifferenz von 0,3 mm auf. Zur Ausrichtung besitzt die Anbindung der Dosiernadel neben zwei translatorischen zusätzlich einen rotatorischen Freiheitsgrad.

Zur Kühlung der Dosiernadel besitzt der Aufbau ebenfalls eine Kühleinheit, welche ebenso mit zwei translatorischen und einem rotatorischen Freiheitsgrad senkrecht zur Dosiernadel an den FDM-Drucker angebunden ist. Die Kühlfunktion der Kühleinheit basiert dabei auf einer gezielten Druckluftzugabe, welche wiederum durch eine Flachstrahldüse realisiert wird.

Zur Durchführung des Verfahrens wird nach dem Start in Druckrichtung zunächst über die Dosiernadel das zweite Material 14 durch eine Druckförderung mit 1,5 bar auf den Träger 16 aufgetragen. Die Verfahr-Geschwindigkeit in Druckrichtung beträgt dabei 0,5 mm/s. Das zweite Material 14 besteht dabei aus einem Silberleitkleber mit einem durchschnittlichen Partikeldurchmesser von Silberpartikeln von Ø 0,05 mm und einer Sinterzeit von 2 s bei 175 °C unter idealen Bedingungen.

Parallel zum Auftrag des zweiten Materials 14 wird über die Düse das erste Material 12 mit einer Höhendifferenz von 0,3 mm auf das zweite Material 14 aufgetragen. Das zweite Material 12 besteht dabei aus einem handelsüblichen Filament (PLA) mit einem Schmelzbereich zwischen 160-190 °C. Die Düse weist während des Druckvorgangs eine Temperatur von 210 °C auf und die Verfahr-Geschwindigkeit in Druckrichtung beträgt ebenfalls 0,5 mm/s.

Dadurch wird das erste Material 12 auf das zweite Material 14 aufgetragen und eine Untersuchung hat gezeigt, dass bei diesem Verfahren ein Sintern des zweiten Materials 14 beziehungsweise des Silberleitklebers erfolgt ist.

Laut Herstellerangaben besitzt der Silberleitkleber unter idealen Bedingungen und unter Anwendung eines optimalen Sinterprozesses eine elektrische Leitfähigkeit von 1xE6 S/m. Mit dem hier beschriebenen Verfahren liegt die elektrische Leitfähigkeit des Silberleitklebers unter Berücksichtigung der erschwerten Rahmenbedingungen hinsichtlich des Sinterprozesses lediglich um den Faktor > 2-3 unter der Herstellerangabe, was aber dennoch den Erfolg des Sinterschrittes zeigt.

### Bezugszeichen

- 10: Vorrichtung
- 12: erstes Material
- 14: zweites Material
- 16: Träger
- 18: erste Austragvorrichtung
- 20: zweite Austragvorrichtung
- 22: Mischanschluss
- 24: berührungslose Dosiereinheit
- 26: Kühlelement

## Patentansprüche

1. Verfahren zum Herstellen eines Bauteils mittels eines additiven Fertigungsverfahrens, wobei das Bauteil aus wenigstens einem ersten Material (12) und einem zu dem ersten Material (12) verschiedenen zweiten Material (14) aufgebaut wird, wobei das Verfahren die folgenden Schritte aufweist:
a) Schichtweises Aufbauen des Bauteils durch lokal begrenztes Aufbringen des ersten Materials (12) und des zweiten Materials (14) auf eine Auflagefläche; wobei
b) das schichtweise Aufbauen des Bauteils durch lokal begrenztes Aufbringen des ersten Materials (12) und des zweiten Materials (14) auf eine Auflagefläche entsprechend der Geometrie des herzustellenden Bauteils erfolgt, wobei
c) das erste Material (12) und das zweite Material (14) zumindest zum Teil auf die Auflagefläche derart aufgebracht werden, dass das zweite Material (14) zumindest zum Teil mit dem ersten Material (12) in Kontakt steht, wenn das erste Material (12) eine Temperatur aufweist, die in einem Bereich liegt von ≥ 100°C, wobei das zweite Material (14) ein zu sinterndes Material ist und dass das erste Material (12) und das zweite Material (14) zumindest zum Teil auf die Auflagefläche derart aufgebracht werden, dass das zweite Material (14) zumindest zum Teil mit dem ersten Material (12) in Kontakt steht, wenn das erste Material (12) noch eine Temperatur aufweist, die oberhalb der Sintertemperatur des zu sinternden Materials liegt.

2. Verfahren nach Anspruch 1, **dadurch gekennzeichnet, dass** das zweite Material (14) mit dem in einer Temperatur von ≥ 100°C vorliegenden ersten Material (12) vor dem Aufbringen des ersten Materials (12) auf die Auflagefläche in Kontakt kommt, so dass das erste Material (12) und das zweite Material (14) in einem Schritt gemeinsam auf die Auflagefläche aufgebracht werden.

3. Verfahren nach einem der Ansprüche 1 oder 2, **dadurch gekennzeichnet, dass** das zweite Material (14) mit dem in einer Temperatur von ≥ 100°C vorliegenden ersten Material (12) in Kontakt kommt, nachdem das erste Material (12) auf die Auflagefläche aufgebracht wurde oder wenn das erste Material auf die Auflagefläche aufgebracht wird.

4. Verfahren nach einem der Ansprüche 1 bis 3, **dadurch gekennzeichnet, dass** mit dem zweiten Material (14) wenigstens eine Oberflächenstruktur des Bauteils erzeugt wird.

5. Verfahren nach einem der Ansprüche 1 bis 4, **dadurch gekennzeichnet, dass** mit dem zweiten Material (14) eine innere Struktur des Bauteils erzeugt wird.

6. Verfahren nach einem der Ansprüche 1 bis 5, **dadurch gekennzeichnet, dass** das erste Material (12) nicht elektrisch leitfähig ist und dass das zweite Material (14) elektrisch leitfähig ist.

7. Verfahren nach Anspruch 6, **dadurch gekennzeichnet, dass** das zweite Material (14) eine Leittinte ist.

8. Verfahren nach einem der Ansprüche 1 bis 7, **dadurch gekennzeichnet, dass** sich das erste Material (12) und das zweite Material (14) in wenigstens einer Eigenschaft unterscheiden, die ausgewählt ist aus der Gruppe bestehend aus elektrische Leitfähigkeit; thermische Leitfähigkeit; magnetische Eigenschaften; mechanische Eigenschaften; oberflächenverändernde Eigenschaften, tribologische Eigenschaften, ästhetische Eigenschaften, partikelbeinhaltenden Eigenschaften, optische Eigenschaften.

9. Verfahren nach einem der Ansprüche 1 bis 8, **dadurch gekennzeichnet, dass** das erste Material (12) ausgewählt ist aus der Gruppe bestehend aus Metallen, Kunststoffen, Keramiken, Graphit- oder Carbonmaterialien.

10. Verwendung eines Verfahrens nach einem der Ansprüche 1 bis 9 zum Herstellen eines elektrisch nicht leitenden Bauteils mit einer elektrisch leitfähigen Struktur.

## Claims

1. Method for producing a component by means of an additive manufacturing method, wherein the component is built up from at least a first material (12) and a second material (14) which differs from the first material (12), wherein
the method comprises the following steps:
a) building up the component layer by layer by applying the first material (12) and the second material (14) to a support surface in a locally confined manner; wherein
b) the layer-by-layer build-up of the component is effected by applying the first material (12) and the second material (14) to a support surface in a locally confined manner according to the geometry of the component to be produced; wherein
c) the first material (12) and the second material (14) are at least partly applied to the support surface in such a way that the second material (14) is at least partly in contact with the first material (12) when the first material (12) has a temperature which lies in a range of ≥ 100°C, wherein the second material (14) is a material to be sintered and in that the first material (12) and the second material (14) are at least partly applied to the support surface in such a way that the second material (14) is at least partly in contact with the first material (12) when the first material (12) still has a temperature which is above the sintering temperature of the material to be sintered.

2. Method according to Claim 1, **characterized in that** the second material (14) comes into contact with the first material (12), which is present at a temperature of ≥ 100°C, before the first material (12) is applied to the support surface, such that the first material (12) and the second material (14) are jointly applied to the support surface in one step.

3. Method according to either of Claims 1 and 2, **characterized in that** the second material (14) comes into contact with the first material (12), which is present at a temperature of ≥ 100°C, after the first material (12) has been applied to the support surface or when the first material is applied to the support surface.

4. Method according to one of Claims 1 to 3, **characterized in that** at least one surface structure of the component is generated with the second material (14).

5. Method according to one of Claims 1 to 4, **characterized in that** an inner structure of the component is generated with the second material (14).

6. Method according to one of Claims 1 to 5, **characterized in that** the first material (12) is not electrically conductive, and **in that** the second material (14) is electrically conductive.

7. Method according to Claim 6, **characterized in that** the second material (14) is a conductive ink.

8. Method according to one of Claims 1 to 7, **characterized in that** the first material (12) and the second material (14) differ in terms of at least one property selected from the group consisting of: electrical conductivity; thermal conductivity; magnetic properties; mechanical properties; surface-changing properties; tribological properties; aesthetic properties; particle-containing properties; optical properties.

9. Method according to one of Claims 1 to 8, **characterized in that** the first material (12) is selected from the group consisting of metals, plastics, ceramics, graphite or carbon materials.

10. Use of a method according to one of Claims 1 to 9 for producing an electrically non-conductive component having an electrically conductive structure.

## Revendications

1. Procédé de fabrication d'un composant au moyen d'un procédé de fabrication additive, le composant étant construit à partir d'au moins un premier matériau (12) et d'un deuxième matériau (14) différent du premier matériau (12),
le procédé comprenant les étapes suivantes :
a) la construction par couches du composant par application locale du premier matériau (12) et du deuxième matériau (14) sur une surface de support ;
b) la construction par couches du composant s'effectuant par application localement limitée du premier matériau (12) et du deuxième matériau (14) sur une surface de support correspondant à la géométrie du composant à fabriquer,
c) le premier matériau (12) et le deuxième matériau (14) étant appliqués au moins en partie sur la surface de support de telle sorte que le deuxième matériau (14) est au moins en partie en contact avec le premier matériau (12) lorsque le premier matériau (12) présente une température qui se situe dans une plage de ≥ 100°C, le deuxième matériau (14) étant un matériau à fritter et en ce que le premier matériau (12) et le deuxième matériau (14) étant appliqués au moins en partie sur la surface de support de telle sorte que le deuxième matériau (14) est au moins en partie en contact avec le premier matériau (12) lorsque le premier matériau (12) présente encore une température qui est supérieure à la température de frittage du matériau à fritter.

2. Procédé selon la revendication 1, **caractérisé en ce que** le deuxième matériau (14) vient en contact avec le premier matériau (12) présent à une température ≥ 100 °C avant l'application du premier matériau (12) sur la surface de support, de telle sorte que le premier matériau (12) et le deuxième matériau (14) sont appliqués ensemble sur la surface de support en une seule étape.

3. Procédé selon l'une quelconque des revendications 1 ou 2, **caractérisé en ce que** le deuxième matériau (14) vient en contact avec le premier matériau (12) présent à une température ≥ 100 °C après que le premier matériau (12) a été appliqué sur la surface de support ou lorsque le premier matériau est appliqué sur la surface de support.

4. Procédé selon l'une quelconque des revendications 1 à 3, **caractérisé en ce qu'**au moins une structure de surface du composant est créée avec le deuxième matériau (14).

5. Procédé selon l'une quelconque des revendications 1 à 4, **caractérisé en ce qu'**au moins une structure interne du composant est créée avec le deuxième matériau (14).

6. Procédé selon l'une quelconque des revendications 1 à 5, **caractérisé en ce que** le premier matériau (12) est non conducteur de l'électricité et **en ce que** le deuxième matériau (14) est conducteur de l'électricité.

7. Procédé selon la revendication 6, **caractérisé en ce que** le deuxième matériau (14) est une encre conductrice.

8. Procédé selon l'une quelconque des revendications 1 à 7, **caractérisé en ce que** le premier matériau (12) et le deuxième matériau (14) diffèrent par au moins une propriété choisie dans le groupe constitué par la conductivité électrique ; la conductivité thermique ; les propriétés magnétiques ; les propriétés mécaniques ; les propriétés de modification de surface, les propriétés tribologiques, les propriétés esthétiques, les propriétés de rétention de particules, les propriétés optiques.

9. Procédé selon l'une quelconque des revendications 1 à 8, **caractérisé en ce que** le premier matériau (12) est choisi dans le groupe constitué par les métaux, les plastiques, les céramiques, les matériaux de graphite ou de carbone.

10. Utilisation d'un procédé selon l'une quelconque des revendications 1 à 9 pour la fabrication d'un composant non conducteur de l'électricité ayant une structure conductrice de l'électricité.
